# EUROPÄISCHE PATENTSCHRIFT

(11) **EP 1 410 891 B1**
(45) Veröffentlichungstag und Bekanntmachung des Hinweises auf die Patenterteilung: **25.11.2009**
(21) Anmeldenummer: 03013685.7
(22) Anmeldetag: 17.06.2003
(51) Int. Cl.: B29C 45/28

(54) **Kaltkanal-Verschlussdüse für das Spritzgiessen von Elastomeren**
Cold runner shut-off nozzle for the injection molding of elastomers
Buse à obturation de canal froid pour le moulage par injection des élastomères

(30) Priorität: 15.10.2002 DE 10248071; 13.05.2003 DE 10321355
(43) Veröffentlichungstag der Anmeldung: 21.04.2004
(73) Patentinhaber: Klöckner Desma Elastomertechnik GmbH, 78567 Fridingen (DE)
(72) Erfinder: Dufner, Manfred, 72505 Krauchenwies (DE)
(74) Vertreter: Röther, Peter

(56) Entgegenhaltungen:
- US-A- 3 912 133
- PATENT ABSTRACTS OF JAPAN vol. 1995, no. 11, 26. Dezember 1995 (1995-12-26) & JP 07 223241 A (MITSUBISHI HEAVY IND LTD), 22. August 1995 (1995-08-22)
- MICHAELI W ET AL: "KALTKANALSYSTEME FUR DAS SPRITZGIESSEN VON ELASTOMEREN COLD RUNNER SYSTEMS IN INJECTION MOULDING OF ELASTOMERS" KAUTSCHUK UND GUMMI - KUNSTSTOFFE, DR. ALFRED HUTHIG VERLAG GMBH. HEIDELBERG, DE, Bd. 48, Nr. 9, 1. September 1995 (1995-09-01), Seiten 625-628,630-63, XP000531724 ISSN: 0948-3276
- MENGES, G; MICHAELI, W.; MOHREN, P.: "How to make injection molds" 2000 , CARL HANSER VERLAG , MÜNCHEN XP002253372 ISBN: 3-44621256-6 * Seite 144 *

## Beschreibung

Die Erfindung betrifft eine Düse zum Einspritzen plastifizierter Elastomere über eine Angussöffnung in eine Kavität eines Spritzgießwerkzeugs, wobei die Düse an einem Kaltkanalblock montiert ist, der zur Verteilung des in einem Plastifizieraggregat plastifizierten Materials zwischen dem Plastifizieraggregat und dem Spritzgießwerkzeug angeordnet ist, die Angussöffnung durch eine Nadel verschließbar ist, die das düsenöffnungsseitige Ende eines axial im Düsenkörper verschiebbaren und einen Materialförderkanal aufweisenden Einsatzes ist, wobei für die Verschiebebewegung ein externer Antrieb vorgesehen ist.

Die Erfindung geht dabei aus von einer Düse, wie sie in der US-A-3 912 133 (entsprechend DE 2 336 099 A1) beschrieben ist. Hier ist zwar die Düse nicht an einem Kaltkanalblock anmontiert, es ist jedoch ein axial verschiebbarer Einsatz mit einem material führenden Kanal vorgesehen. Darüber hinaus weist diese Düse einen externen Antrieb für die axiale Bewegung des Einsatzes auf. Dieser externe Antrieb besteht aus einem Hebel, der mittels eines Zahntriebes die axiale Bewegung des Einsatzes bewirkt. Der Kraftansatz des Hebels ist jedoch dabei einseitig, so dass die Belastung des Einsatzes unsymmetrisch ist, wodurch eventuell Verkantungen des Einsatzes, auf jeden Fall aber ein größerer Verschleiß desselben zu gewärtigen ist.

Darüber hinaus ist die Nadel in den Einsatz einschraubbar, also nicht integraler Bestandteil des Einsatzes, der somit kompliziert und aufwendig in der Herstellung ist, wobei weiterhin zu beachten ist, dass die Geometrie des Einsatzes (Differenzialkolben) ebenfalls zu einer aufwendigeren Herstellung führt.

Eine ähnliche Vorrichtung ergibt sich aus der Druckschrift Patent Abstracts of Japan Bd. 1995, Nr. 11, 26. Dezember 1995 & JP 07 223241 A.

Der Erfindung liegt daher die Aufgabe zugrunde, eine Düse der eingangs genannten Art so weiter zu bilden, dass angusslos gespritzt werden kann und wobei die Krafteinleitung für die Nadelbewegung um den Düsenkanal umfangsymmetrisch erfolgt.

Die Erfindung löst diese Aufgabe gemäß dem kennzeichnenden Teil des Patentanspruchs 1 dadurch, dass der Einsatz und die Nadel eine bauliche Einheit bilden und der Antrieb für die Verschiebebewegung des axial im Düsenkörper verschiebbaren Einsatzes ein Kurzhubzylinder ist, der über außerhalb des Düsenkörpers angeordnete Stangen mit einem Haltering verbunden ist, der den Düsenkörper in Höhe des Einsatzes umgibt und auf dem Düsenkörper axial verschiebbar gelagert ist, wobei im Haltering mehrere Bolzen radial zur Düsenmittelachse angeordnet sind und mit ihren nach innen weisenden Enden in einen ringförmige Einstich im Einsatz hineinragen.

Durch die erfindungsgemäße Ausgestaltung sind Betätigung der Verschlussnadel und die Materialführung von einander getrennt. Der die Nadel aufweisende Einsatz wird innen durchströmt. Im Bereich des Materialflusses sind keine Dichtungen eingesetzt. Weiterhin ergibt sich der Vorteil, dass kein Angussabfall anfällt, da das Werkstück direkt mit der Düse angespritzt wird.

Durch die Betätigung des Kurzhubzylinders ziehen die Stangen den Haltering und den mit dem Haltering formschlüssig verbundenen Einsatz zurück, wodurch die Nadel aus der Angussöffnung nach hinten weg gefahren wird, wodurch der Spritzvorgang begonnen werden kann. Zum Verschließen der Angussöffnung erfolgt der Vorgang in umgekehrter Richtung.

Gemäß Anspruch 2 ist vorgesehen, dass der Material fördernde Kanal im Einsatz in Bohrungen endet, der vor dem Beginn des Nadelbereichs im Düsenmundstück münden.

Wesentlich hierbei ist, dass der Einsatz und die Nadel eine bauliche Einheit bilden, wodurch es - wie bereits oben erwähnt - möglich ist, dass Material führung (durch den Einsatz) und Betätigung der Verschlussnadel voneinander getrennt sind.

Die Düsenöffnung befindet sich im Düsenmundstück, das gemäß Anspruch 3 durch einen konisch ausgebildeten Gewindering gebildet seinkann, der auf das vordere Ende des Düsenkörpers aufschraubbar ist, so dass in diesem Zustand ein konischer Raum gebildet wird, der einerseits durch die konischen Wände des Gewinderings und rückseitig durch die vordere Stirnseite des Einsatzes gebildet ist. Das Düsenmundstück kann aber auch mit dem Düsenkörper eine Einheit bilden (Anspruch 4).

Das plastifizierte Material aus dem Kaltkanal gelangt zunächst in den Kanal, in dem der Einsatz verschiebbar geführt ist und von hier in den Einsatz selbst und durch die Bohrungen vor der Nadel in den Raum im Düsenmundstück.

Wie bereits oben ausgeführt, sind zur Verhinderung der Vulkanisation von plastifiziertem Material im Kaltkanal im Kaltkanalblock temperiermedienführende Kanäle vorgesehen. Damit das Material nicht vorzeitig in der Düse aushärtet, ist gemäß Anspruch 5 vorgesehen, dass auch im Düsenkörper Kanäle zur Führung eines Temperiermediums vorgesehen sind, wodurch eine Temperierung der Düse bis in den vorderen Bereich der Düse erfolgt.

Die Erfindung wird im folgenden anhand einer Zeichnung dargestellt und erläutert.

Es zeigt:

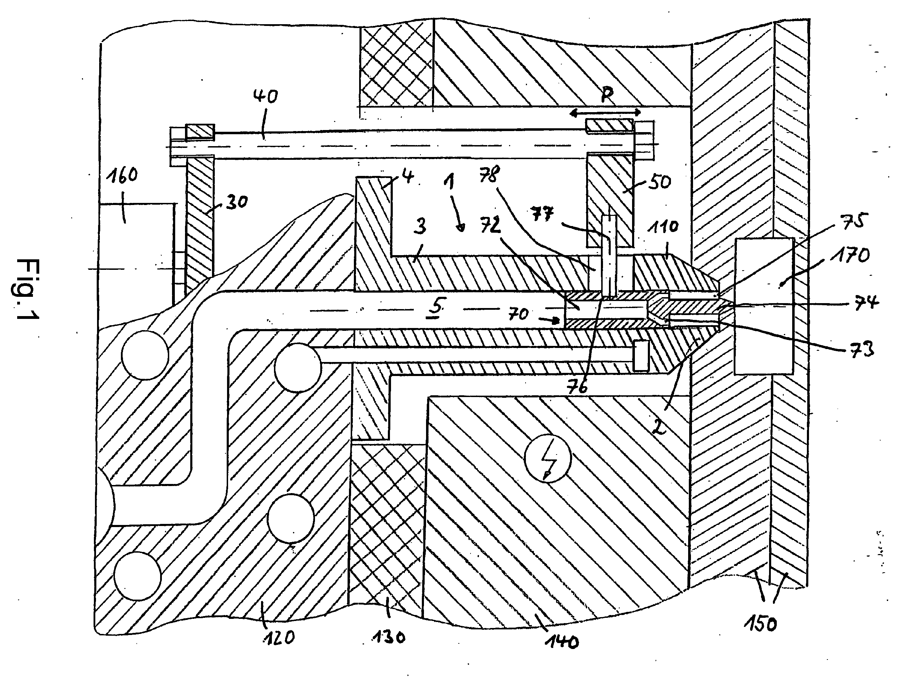

- Fig. 1:: Düse im Schnitt

In der Fig. 1 ist eine an einem Kaltkanalblock 120 angeflanschte Düse dargestellt und allgemein mit dem Bezugszeichen 1 versehen. Der Kaltkanalblock 120 ist durch eine Isolierplatte 130 von einer Heizplatte 140 getrennt, die wiederum am Formwerkzeug 150 anliegt . Es handelt sich bei der Düse 1 um eine so genannte Nadelverschlussdüse, Die Düse 1 besteht in ihren wesentlichen Teilen aus einem Düsenmundstück 2, einem Düsenkörper 3, einem Montageflansch 4, der am Kaltkanalblock 120 anmontiert wird.

Wie sich aus der Figur ergibt, bildet das Düsenmundstück 2 einen konisch ausgebildeten, integralen Bestandteil 110, des Düsenkörpers 3. Im Düsenkörper 3 ist ein durchgängiger zylindrischer Kanal 5 vorgesehen, in dem düsenmundstückseitig ein Einsatz 70 axial verschiebbar angeordnet ist. Der Einsatz 70 weist einen materialführenden Kanal auf, der aus einem zylindrischen Bereich 72 besteht, wobei der zylindrische Bereich 72 in Öffnungen 73 endet, die aus dem Einsatz 70 in das Düsenmundstück 2 münden, und zwar in dem Bereich, in dem der Einsatz 70 in eine an den Einsatz 70 angeformte Verschlussnadel 74 übergeht. Die Verschlussnadel 74 verschließt bzw. gibt frei die Angussöffnung 75.

Im Bereich des zylindrischen Kanals 72 ist eine Ringnut 76 in den Umfang des Einsatzes 70 eingeschnitten, in die Bolzen 77 hineinreichen, welche radial in einem Haltering 50 angeordnet sind. Der Haltering 50 ist auf einer Führung 78 auf dem Düsenkörper 3 in axialer Richtung verschiebbar. Hierzu ist der Haltering 50 über Stangen 40 mit einer Halteplatte 30 verbunden, an der ein Kurzhubzylinder 160 befestigt ist.

Das plastifizierte Material gelangt in den Düsenkörper 3, und von dort in den Einsatz 70.

Durch Betätigen des Kurzhubzylinders 160 ziehen die Stangen 40 die Halteplatte 50 zusammen mit dem Einsatz 70 nach hinten, wodurch die Nadel 74 aus der Angussöffnung 75 wegfährt und somit der Zugang des plastifizierten Materials über die Öffnungen 73, das Düsenmundstück 2 und die Düsenöffnung 75 in die Werkzeugkavität 170 gelangen kann.

## Patentansprüche

1. Düse zum Einspritzen plastifizierter Elastomere über eine Angussöffnung in eine Kavität eines Spritzgießwerkzeugs, wobei die Düse an einem Kaltkanalblock montiert ist, der zur Verteilung des in einem Plastifizieraggregat plastifizierten Materials zwischen dem Plastifizieraggregat und dem Spritzgießwerkzeug angeordnet ist, die Angussöffnung (75) durch eine Nadel (74) verschließbar ist, die das düsenöffnungsseitige Ende eines axial am Düsenkörper (3) verschiebbaren und einen Materialförderkanal (71, 72) aufweisenden Einsatzes (70) ist, wobei für die Verschiebebewegung ein externer Antrieb vorgesehen ist,
**dadurch gekennzeichnet,**
**dass** der Einsatz (70) und die Nadel (74) eine bauliche Einheit bilden und der Antrieb für die Verschiebebewegung des axial im Düsenkörper (3) verschiebbaren Einsatzes (70) ein Kurzhubzylinder ist, der über außerhalb des Düsenkörpers (3) angeordnete Stangen (40) mit einem Haltering(50) verbunden ist, der den Düsenkörper (3) in Höhe des Einsatzes (70) umgibt und auf dem Düsenkörper (3) axial verschiebbar gelagert ist, wobei im Haltering (50) mehrere Bolzen (77) radial zur Düsenmittelachse angeordnet sind und mit ihren nach innen weisenden Enden in einen ringförmigen Einstich (76) im Einsatz (70) hinein ragen.

2. Düse nach Anspruch 1,
**dadurch gekennzeichnet,**
**dass** der Material fördernde Kanal im Einsatz (70) in Bohrungen (73) endet, die vor dem Beginn des Nadelbereichs (74) im Düsenmundstück (2) münden.

3. Düse nach Anspruch 2,
**dadurch gekennzeichnet,**
**dass** das Düsenmundstück (2) durch einen konisch ausgebildeten Gewindering (11) gebildet ist, der auf das vordere Ende des Düsenkörpers (3) aufschraubbar ist.

4. Düse nach einem der Ansprüche 2,
**dadurch gekennzeichnet,**
**dass** das Düsenmundstück (2) integraler Bestandteil des Düsenkörpers (3) ist.

5. Düse nach einem der Ansprüche 1 bis 4,
**dadurch gekennzeichnet,**
**dass** im Düsenkörper (3) Kanäle zur Führung eines Temperiermediums vorgesehen sind, wodurch eine Temperierung der Düse bis in den vorderen Bereich der Düse erfolgt.

## Claims

1. Nozzle for injecting plastified elastomers through a gate into a cavity of an injection moulding tool, whereby the nozzle is attached to a cold runner block which is arranged to distribute the material, plastified in a plastifying unit, between the plastifying unit and the injection moulding tool, the gate (75) can be closed by a needle (74), which is the nozzle opening end of an insert (70) having a material feed channel (71, 72) and which can be displaced axially in the nozzle body (3), whereby external actuation is provided for producing the displacement motion,
**characterised in that**
the insert (70) and the needle (74) form a structural unit and the actuation for producing the displacement motion of insert (70) axially displaceable in the nozzle body (3) is a short stroke cylinder which is connected to a retaining ring (50) by means of rods (40) arranged outside the nozzle body (3), whereby said retaining ring encircles the nozzle body (3) level with insert (70) and is fitted on the nozzle body (3) such that it is displaceable axially, whereby several pins (77) are arranged in the retaining ring (50) radially in relation to the central axis of the nozzle and whereby their inward-pointing ends extend inwards into an circular recess (76) in insert (70).

2. Nozzle in accordance with claim 1,
**characterised in that**,
the channel in insert (70) feeding the material terminates in apertures (73) which open out in the nozzle mouth piece (2) before the commencement of the needle area (74).

3. Nozzle in accordance with claim 2, **characterised in that**,
the nozzle mouth piece (2) is formed by a conical threaded ring (11) which can be screwed on to the forward end of the nozzle body (3).

4. Nozzle in accordance with *claim 2*,
**characterised in that**,
the nozzle mouth piece (2) is an integral component part of the nozzle body (3).

5. Nozzle in accordance with one of claims 1 to 4,
**characterised in that**,
in nozzle body (3), channels are provided to carry a heating fluid, by means of which the temperature of the nozzle is stabilised up to the forward end of the nozzle.

## Revendications

1. Buse pour injecter des élastomères plastifiés à travers un orifice d'injection dans une cavité d'un outil d'injection, la buse étant montée sur un bloc de canal froid qui, pour la distribution du matériau plastifié dans un groupe de plastification, est disposé entre le groupe de plastification et l'outil de moulage par injection, l'orifice d'injection (75) pouvant être fermé par une pointe (74) qui est l'extrémité, côté ouverture de buse, d'un insert (70) pouvant coulisser axialement sur le corps de buse (3) et présentant un canal de transport de matière (71, 72), un entraînement externe étant prévu pour le mouvement de coulissement, **caractérisée en ce que** l'insert (70) et la pointe (74) forment une unité structurelle et l'entraînement pour le mouvement de coulissement de l'insert (70), pouvant coulisser axialement dans le corps de buse (3), est un vérin à course courte qui est relié, par des tiges (40) situées à l'extérieur du corps de buse (3), à une bague de maintien (50) qui entoure le corps de buse (3) à hauteur de l'insert (70) et est montée coulissante axialement sur le corps de buse (3), plusieurs chevilles (77) étant disposées dans la bague de maintien (50), radialement par rapport à l'axe médian de la buse, et pénétrant, par leurs extrémités tournées vers l'intérieur, dans une entaille (76) de forme annulaire de l'insert (70).

2. Buse selon la revendication 1, **caractérisée en ce que** le canal transportant la matière dans l'insert (70) se termine dans les alésages (73) qui débouchent dans l'embout (2) de la buse en amont du début de la zone de pointe (74).

3. Buse selon la revendication 2, **caractérisée en ce que** l'embout de buse (2) est formé par une bague taraudée (11) de forme conique qui peut être vissée sur l'extrémité avant du corps de buse (3).

4. Buse selon l'une quelconque des revendications 2 ou 3, **caractérisée en ce que** l'embout de buse (2) fait partie intégrante du corps de buse (3).

5. Buse selon l'une quelconque des revendications 1 à 4, **caractérisée en ce que** dans le corps de buse (3) sont prévus des canaux pour le guidage d'un fluide de maintien en température, ce par quoi un maintien en température de la buse se produit jusque dans la zone avant de la buse.
